# EUROPÄISCHE PATENTSCHRIFT

(11) **EP 3 104 688 B1**
(45) Veröffentlichungstag und Bekanntmachung des Hinweises auf die Patenterteilung: **16.05.2018**
(21) Anmeldenummer: 15703979.3
(22) Anmeldetag: 10.02.2015
(51) Int. Cl.: A01J 5/08

(54) **ZITZENGUMMI**
TEAT CUP LINER
MANCHON POUR GOBELET TRAYEUR

(30) Priorität: 10.02.2014 DE 102014101613
(43) Veröffentlichungstag der Anmeldung: 21.12.2016
(73) Patentinhaber: INRAD Technologies B.V., 6605 WD Wijchen (NL)
(72) Erfinder: HAPPEL, Werner, 87654 Friesenried (DE)
(74) Vertreter: Winter, Brandl, Fürniss, Hübner, Röss, Kaiser, Polte - Partnerschaft mbB
(86) Internationale Anmeldenummer: PCT/EP2015/052773
(87) Internationale Veröffentlichungsnummer: WO 2015/118170

(56) Entgegenhaltungen:
- EP-A1- 1 334 656
- CH-A- 477 812
- CH-A5- 562 553
- FR-A- 607 734
- US-A1- 2008 072 826
- US-B1- 8 567 346

## Beschreibung

Die Erfindung betrifft einen Zitzengummi gemäß dem Oberbegriff des Patentanspruches 1.

Beim maschinellen Melken ist eine schonende Zitzenbehandlung von entscheidender Bedeutung. Eine derartige schonende Zitzenbehandlung ist beispielsweise bei Melksystemen gewährleistet, bei denen eine Vakuumentlastung in der Massagephase erfolgt, wie es auch beim natürlichen Kalbsaugen der Fall ist. Durch diese Vakuumentlastung wird die Zitzenkondition nachweisbar positiv beeinflusst.

Ein derartiges Melksystem ist beispielsweise in der EP 1 119 235 B1 offenbart. Bei diesen Melksystemen werden Zitzengummis verwendet, die in an sich bekannter Weise einen Zitzengummikopf mit einem sich daran anschließenden Schlauchteil zur Aufnahme der Zitze aufweisen. In einem von dem Schlauchteil umgriffenen Innenraum mündet ein durch einen Schrägabschluss gebildeter Vakuumanschluss, an dem das Melkvakuum anliegt. Der Vakuumanschluss ist als Schrägabschluss des Zitzengummis ausgebildet. In einem zum Schrägabschluss benachbarten Abschnitt des Schlauchteils ist ein Dünnwandbereich ausgebildet. Dieser Zitzengummi ist in einen Melkbecher eingespannt, wobei ein vom Schlauchteil begrenzter Ringraum über eine Pulsatorsteuerung abwechselnd mit Vakuum, Atmosphäre oder Überdruck beaufschlagbar ist. Auf diese Weise kann durch das Steuern der Druckdifferenz zwischen dem Schlauchteil-Innenraum und dem außen liegenden Ringraum die Massagephase gesteuert werden, wobei sich dann der Dünnwandbereich einfaltet und den Schrägabschluss gegenüber dem Vakuum absperrt. Hinsichtlich weiterer Details dieses Melksystems ist auf die oben genannte Patentschrift verwiesen.

Der Milchtransport zu einem mit den Melkbechern/Zitzengummis verbundenen Sammelstück lässt sich weiter verbessern, wenn im Zitzengummi ein Belüftungskanal gemäß der DE 10 2006 026 271 A1 und den zugehörigen Zusatzanmeldungen DE 10 2007 053 230 A1 und DE 10 2006 040 079 A1 ausgebildet ist. Dabei kann im Zitzengummikopf eine Kopfdüse vorgesehen werden, über die der Luftstrom durch den Belüftungskanal gesteuert wird, so dass ein andauerndes Vakuum im Kopfraum des Zitzengummis verhindert werden kann. Ein weiteres Zitzengummi ist aus CH562553 bekannt. Trotz der äußerst positiven Erfahrungen mit diesem Melksystem besteht weiterhin der Anspruch, das Melkverfahren noch schonender zu gestalten.

Der Erfindung liegt demgemäß die Aufgabe zugrunde, einen Zitzengummi zu schaffen, der bei einfachem Aufbau ein noch schonenderes Melken ermöglicht.

Diese Aufgabe wird durch einen Zitzengummi mit den Merkmalen des Patentanspruches 1 gelöst.

Vorteilhafte Weiterbildungen der Erfindung sind Gegenstand der Unteransprüche.

Der erfindungsgemäße Zitzengummi hat einen Zitzengummikopf und ein Schlauchteil, das einen Innenraum begrenzt, in dem ein Vakuumanschluss mündet. Dieser Vakuumanschluss kann beispielsweise als Schrägabschluss ausgebildet sein, der mittels eines Dünnwandbereiches des Schlauchteils absperrbar ist. Das erfindungsgemäße Schlauchteil hat eine vergleichsweise dickwandige Schlauchteilrückwand, die sich in Axialrichtung gesehen etwa vom Zitzengummikopf weg bis in den Bereich des Vakuumanschlusses erstreckt und dabei mehr als 30% des Schlauchteilumfangs umgreift. Die Wandstärke dieser Schlauchteilrückwand ist deutlich größer als die Wandstärke des verbleibenden Schlauchteilumfangs im Zitzenaufnahmebereich ausgebildet. Dieser Bereich ist im folgenden als Massagewandung bezeichnet.

Durch diese in etwa halbseitige Verstärkung der Schlauchteilrückwandung wird, ähnlich wie beim Rachen eines Kalbes, die Hauptmassage der Zitze nur von der gegenüberliegenden Halbseite des Schlauchteils durchgeführt. Die Zitzenspitze lehnt sich dabei im Wesentlichen nur an die vergleichsweise steife Schlauchteilrückwand an.

Die Massagewirkung lässt sich verbessern, wenn die Massagewandung, d.h. der oder die Wandungsbereiche, die sich mit der Schlauchteiltrückwand zum Umfang ergänzen, mit zumindest einer vorzugsweise zwei oder mehr Stabilisierungsleisten versehen sind.

Diese Stabilisierungsleiste ist vorzugsweise einstückig mit dem Zitzengummi ausgebildet.

Erfindungsgemäß sind zwei Stabilisierungsleisten im Abstand zu einander angeordnet. Diese beiden Stabilisierungsleisten können entsprechend des in Achsrichtung gesehen schrägen Verlaufs der Rückwandkanten entsprechen schräg zu einander angestellt sein.

Diese Schräganstellung kann beispielsweise so gewählt werden, dass die Stabilisierungsleisten in einem gleichbleibenden Parallelabstand zur jeweiligen Rückwandkante verlaufen.

Zwischen den Stabilisierungsleisten kann zumindest eine Querrippe vorgesehen werden. Diese Querrippen begrenzen vorzugsweise dünnwandige Massagezonen.

Durch diese Maßnahme ist gewährleistet, dass eine optimale Massagewirkung - unabhängig von der Zitzenlänge - auch im Strichkanalbereich durch die dünnen Wandstärken der Massagezonen zwischen den zumindest zwei Leisten gewährleistet ist. Die Querrippen ermöglichen es, auch unterschiedliche Zitzenlängen bestmöglich zu massieren.

Beispielsweise werden durch sechs Querrippen sieben Massagezonen ausgebildet.

Selbstverständlich kann die Anzahl der Querrippen variiert werden, so dass mehr oder weniger Massagezonen ausgebildet werden.

Die Stabilisierungsleisten verlaufen vorzugsweise im Wesentlichen in Längsrichtung.

Für eine besonders effiziente und schonende Massagewirkung ist bei einem Ausführungsbeispiel der Erfindung vorgesehen, dass der Abstand der Stabilisierungsleisten etwa die Hälfte des jeweiligen Schlauchteildurchmessers beträgt. Dabei wird es bevorzugt, wenn der Abstand der Stabilisierungsleisten untereinander größer ist als der Abstand der jeweiligen Stabilisierungsleiste zur Schlauchteilrückwand oder zur Rückwandkante.

Um den Schrägabschluss durch Einfalten des Zitzengummis nicht zu behindern, enden die Stabilisierungsleisten vorzugsweise im Abstand zum Vakuumabschluss.

Dieser Abstand kann beispielsweise 5 bis 15 mm betragen, so dass sichergestellt ist, dass die Funktion des Vakuumanschlusses nicht behindert ist.

Die eingangs beschriebenen Querrippen sind bei einem Ausführungsbeispiel in gleichbleibenden Abständen von beispielsweise 8 bis 15 mm zwischen den Stabilisierungsleisten angeordnet. Diese "gliederkettenartige" Anordnung der Querrippen mit Bezug zu den Stabilisierungsleisten verhilft zu einer kontrollierten Längsverformung der Massagewandung bei der Massage.

Der Querschnitt der Querrippen und/oder der Stabilisierungsleisten ist vorzugsweise in etwa halbrund- oder trapezförmig ausgebildet. Diese Quer- und Stabilisierungsrippen unterstützen die Rückstellung der Öffnungsbewegung des Zitzengummis nach der Massage. Erfindungsgemäß ist die Wandstärke der Massagewandung kopfseitig größer als zum Vakuumanschluss hin ausgebildet - d.h. die Wandstärke der Massagewandung nimmt vom Zitzengummikopf weg hin zum Vakuumanschlussbereich des Schlauchteils ab.

Bei einem bevorzugten Ausführungsbeispiel der Erfindung geht die Schlauchteilrückwandung in etwa stufenförmig in die dünneren Massagewandung über.

Dieser Übergang kann durch Rückwandkanten ausgebildet sein.

Erfindungsgemäß wird es bevorzugt, wenn dieser Übergang schräg zur Längsachse angestellt ist, so dass sich der Umfangsanteil der Schlauchteilrückwandung vom Zitzengummibereich hin zum Vakuumanschluss verringert und entsprechend der Umfangsanteil der dünnwandigeren Massagewandung vergrößert. Erfindungsgemäß verringert sich die Schlauchteilrückwand im Zitzengummikopfbereich etwa entlang der Hälfte des dortigen Umfangs erstreckt und sich dann zum Vakuumanschluss hin, so dass sich der Umfangsanteil der dünneren Massagewandung entsprechend vergrößert.

Bei einer Variante der Erfindung hat das Schlauchteil einen ovalen Querschnitt.

Die Wandstärke der Massagewandung kann bei einem Ausführungsbeispiel zwischen 1 bis 3 mm betragen, während die Wandstärke der Schlauchteilrückwand etwa 3,5 bis 5 mm betragen kann.

Bei der oben beschriebenen Konifizierung des Wandstärkenverlaufes kann die Wandstärke der Massagewandung kopfseitig etwa 3 mm und vakuumanschlussseitig etwa 1,5 mm betragen. Selbstverständlich sind Abweichungen von diesen Abmessungen möglich.

Die Ovalität des Schlauchteils ist durch einen Durchmesserunterschied zwischen 0,5 bis 2 mm gegeben.

Die Vorteile der erfindungsgemäßen Konzeption gegenüber herkömmlichen Lösungen sind wie folgt.
- Aufgrund der verstärkten Schlauchteilrückwand erfolgt die Massage wie beim Kalbsaugen schonend nur von einer Seite her, die Zitze wird nicht beidseitig gequetscht.
- Ein ovaler Zitzengummischacht kann eine richtige Einfall- bzw. Einfaltrichtung des Schlauchteils auf den Schrägabschluss vorgeben.
- Durch die Stabilisierungsleisten wird die Massagebewegung kontrolliert, wobei die gleiche Distanz der Stabilisierungsleisten zur jeweiligen Rückwandkante in einer gleichen seitlichen Verformungsmöglichkeit des Schlauchteils beim Massieren, unabhängig von der Zitzenlänge resultiert. Dabei wird über die Stabilisierungsleisten die Massagekraft in die oberen Bereiche der Zitze übertragen. Die größere Distanz zwischen den Stabilisierungsleisten (verglichen mit dem Abstand zur Rückwandkante) optimiert die Verformung für eine optimale Massage. Dabei kontrollieren und bestimmen die Stärke und die Höhe der Stabilisierungsleisten die Intensität der Massage und können je nach Tierrasse optimiert werden.

Darüber hinaus kann durch Veränderung der Querschnitte der Stabilisierungsleisten das Maß der Volumenänderung zwischen dem Saugen und Massieren und damit auch die Vakuum Verhältnisse und die zeitliche Abstimmung der Massagebewegung beim Melken abgestimmt werden.
- Die Position der Stabilisierungsleisten ist vorzugsweise so gewählt, dass immer die richtige Einfallrichtung des Schlauchteils auf den Schrägabschluss unterstützt wird, auch wenn durch das Lagern des Zitzengummis gewisse Verformungseinflüsse auf den Zitzengummi einwirken. Wie erläutert, ist es dabei vorteilhaft, wenn die Distanz der Stabilisierungsleisten zu einander größer ist als der seitliche Abstand der Stabilisierungsleisten zur Rückwandkante. Durch diese formstabile Ausgestaltung des Zitzengummis ist eine spezielle Einzellagerung und Positionierung nicht mehr erforderlich.

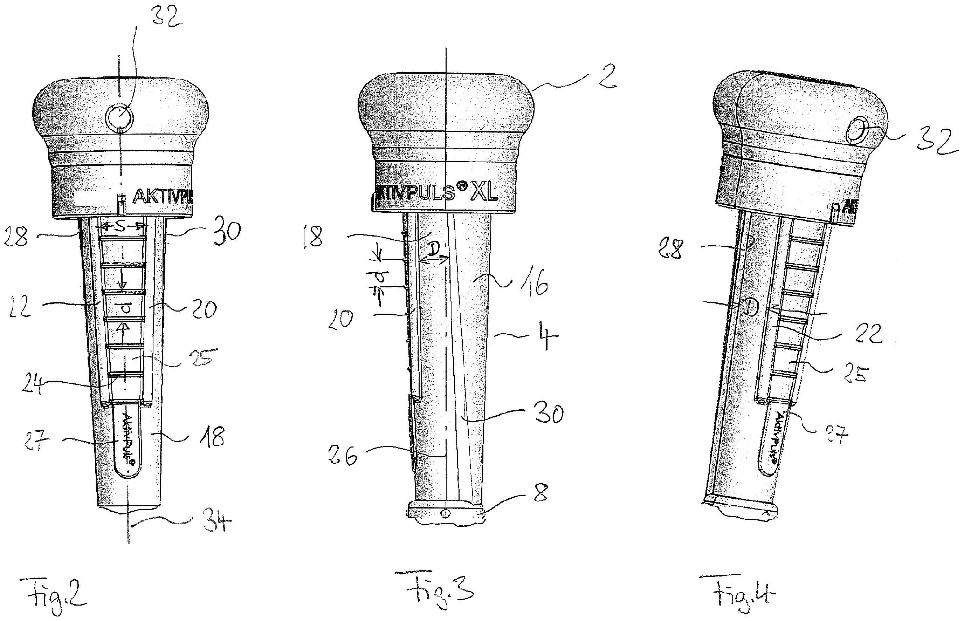

Die durch zwei benachbarte Stabilisierungsleisten und gegebenenfalls durch sich zwischen diesen erstreckenden Querrippen gebildete Struktur ist im weitesten Sinn symmetrisch ausgebildet. Das heißt, bei einer Seitenansicht (beispielsweise gemäß der im Folgenden beschriebenen Figur 2) oder anders ausgedrückt, bei einer senkrechten Projektion dieser Struktur liegt eine Mittelachse, die in dieser Projektion praktisch eine Symmetrieachse bildet, in einer Vertikalebene, die die Mittelachse des Zitzengummis schneidet.

Ein bevorzugtes Ausführungsbeispiel der Erfindung wird im Folgenden anhand schematischer Zeichnungen näher erläutert. Es zeigen:
Figur 1 eine dreidimensionale Darstellung eines erfindungsgemäßen Zitzengummis;
Figur 2 eine Draufsicht auf den Zitzengummi aus Figur 1;
Figur 3 eine Seitenansicht des Zitzengummis und
Figur 4 eine Schrägansicht des Zitzengummis aus Figur 1.

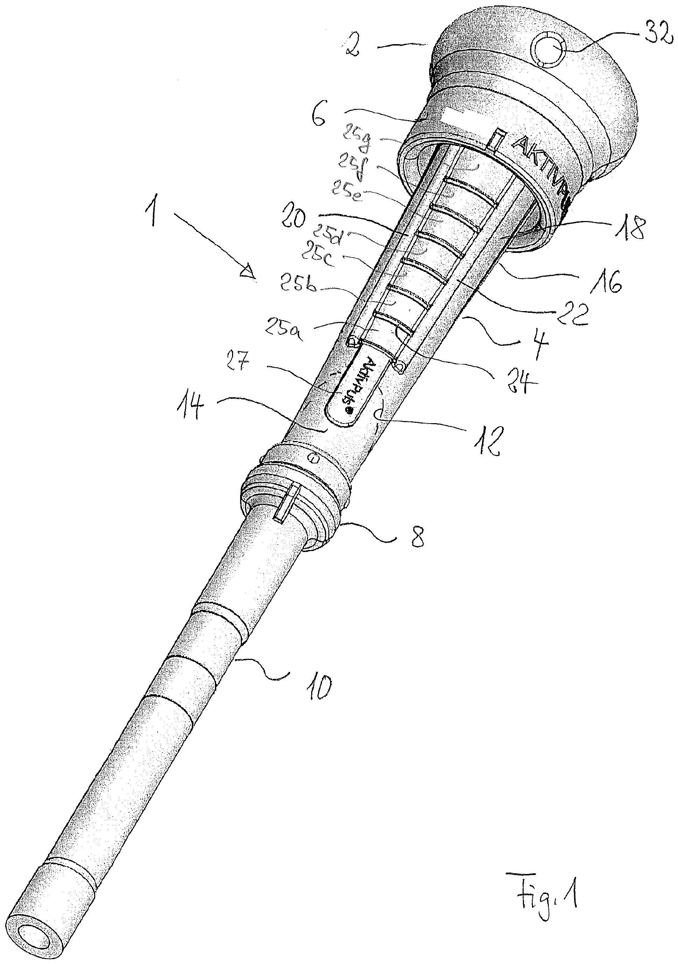

Figur 1 zeigt eine Darstellung eines Zitzengummis 1 eines Melkzeugs, der in einen nicht dargestellten Melkbecher eingespannt ist. Hinsichtlich des prinzipiellen Aufbaus eines derartigen Melkzeugs sei auf den eingangs beschriebenen Stand der Technik verwiesen. Bei einem derartigen so genannten Zweiraummelkbecher liegt im Saugtakt an der Zitze das Melkvakuum an, so dass Milch von der Zitze durch den Zitzengummi 1 hindurch und einem Milchschlauch zu einem Sammelstück abströmen kann. Im Massagetakt wird durch Einlass von Atmosphäre oder Überdruck in den eingangs genannten Ringraum zwischen dem Außenumfang des Zitzengummis 1 und einer Innenumfangswandung des Melkbechers der Zitzengummi 1 eingefaltet (Kollabieren), so dass das Blut von der Zitzenspitze zur Zitzenbasis zurückmassiert wird.

Der in Figur 1 dargestellte Zitzengummi 1 hat einen Zitzengummikopf 2, der in ein Schlauchteil 4 übergeht. Am Zitzengummikopf 2 ist eine Kopfmuffe 6 ausgebildet, die abschnittsweise mit dem zitzengummikopfseitigen Endabschnitt des Schlauchteils 4 überlappt und einen Ringraum bildet, in den ein Endabschnitt eines nicht dargestellten Melkbechers eintaucht. Der andere Endabschnitt des Melkbechers greift an einer Spannwulst 8 des Schlauchteils 4 an, so dass der Zitzengummi 1 in den Melkbecher eingespannt ist. Dieser hat einen Anschluss, über den der genannte Ringraum zwischen dem Schlauchteil 4 und dem Melkbecher über eine Pulsatorsteuerung mit Vakuum, Atmosphäre oder Überdruck verbindbar ist. Beim dargestellten Ausführungsbeispiel schließt sich an die Spannwulst 8 ein integrierter Milchschlauch 10 an, der an ein Sammelstück angesetzt wird.

Das Schlauchteil 4 ist konisch ausgebildet, wobei der Durchmesser vom Zitzengummikopf 2 weg hin zur Spannwulst 8 abnimmt.

Das Schlauchteil 4 umgreift einen Zitzenaufnahmeraum, in den die Zitze des zu melkenden Tiers durch den Zitzengummikopf 2 hindurch eingeführt wird. Die Zitze erstreckt sich dabei jedoch lediglich entlang eines Teils der Axiallänge des Schlauchteils 4, so dass unterhalb dieses Zitzenaufnahmeraums ein Innenraum des Schlauchteils 4 verbleibt, der nicht durch die Zitze ausgefüllt ist. In diesem Bereich ist ein in Figur 1 gestrichelt dargestellter Schrägabschluss 12 ausgebildet, der mittels eines Schlauchteilabschnittes, im Folgenden Dünnwandbereich 14, beim Massagetakt verschlossen werden kann, so dass der Innenraum gegenüber dem Vakuum abgesperrt ist. Die Wandungsstärke des Dünnwandbereiches 14 ist im Hinblick auf das optimale Einfalten / Einfallen ausgelegt. Einzelheiten hierzu sind im Stand der Technik erläutert.

Der dargestellte Zitzengummi 1 ist des Weiteren mit dem eingangs beschriebenen Belüftungskanal und der nicht dargestellten Kopfdüse ausgebildet, um ein übermäßiges Vakuum im Zitzengummikopfbereich zu vermeiden.

Erfindungsgemäß ist der die Zitze umgreifende Bereich des Schlauchteils 4 mit unterschiedlichen Wandstärken ausgeführt. In Figur 1 hinten liegend ist eine mit vergleichsweise großer Wandstärke ausgeführte Schlauchteilrückwand - im Folgenden Rückwand 16 genannt - vorgesehen, die sich mit einer mit vergleichsweise geringer Wandstärke ausgeführten Massagewandung 18 zum Schlauchteil 4 ergänzt. Mit anderen Worten gesagt, der Umfangsbereich des Schlauchteils 4 ist durch die Rückwand 16 und die dünnwandige Massagewandung 18 gebildet.

Zur Steuerung und Kontrolle der Massagebewegung ist die Massagewandung 18 mit zwei Stabilisierungsleisten 20, 22 ausgebildet, die in der Ansicht gemäß Figur 1 etwa V-förmig zu einander angestellt sind und im Abstand oberhalb des Schrägabschlusses 12 enden. Dieser Abstand kann beispielsweise 5 bis 15 mm betragen. Der Querabstand der beiden Stabilisierungsleisten 20, 22 verringert sich hin zu dem Schrägabschluss 12. Wie in Figur 1 erkennbar, erstrecken sich die Massagewandung 18 und die dazugehörigen Stabilisierungsleisten 20, 22 in Axialrichtung gesehen in den Überlappungsbereich mit der Kopfmuffe 6 hinein.

Die beiden V-förmig zu einander angeordneten Stabilisierungsleisten 20, 22 sind über eine Vielzahl von Querrippen 24 verbunden, wobei der Abstand zwischen den Querrippen 24 im Wesentlichen gleich ist. Aufgrund der V-förmigen Anstellung verlängern sich die Querrippen 24 hin zum Zitzengummikopf. Wie erläutert, ist durch diese leiter- oder gliederkettenartige Anordnung der Stabilisierungskontur (Stabilisierungsleisten 20, 22 und Querrippen 24) eine definierte Längs- und Querverformung der Massagewandung 18 gewährleistet.

Beim konkreten Ausführungsbeispiel sind sieben Querrippen 24 ausgebildet, die gemeinsam mit den seitlich angeordneten Stabilisierungsleisten 20, 22 sieben Massagezonen 25a, 25b, 25c, 25d, 25e, 25f und 25g begrenzen. Die Länge der Querrippen 24 vergrößert sich aufgrund der V-förmigen Anstellung der Stabilisierungsleisten 20, 22 weg vom Dünnwandbereich 14 hin zum Zitzengummikopf 2. Beim dargestellten Ausführungsbeispiel ist in Verlängerung der beiden Stabilisierungsleisten 20, 22 eine mittige vergleichsweise flache Längserhebung 27 vorgesehen, die beim dargestellten Ausführungsbeispiel mit dem Markennamen Aktivpuls versehen ist.

Wie eingangs erläutert, kann über die Stabilisierungsleisten 20, 22 und die Querrippen 24 die durch das Einfallen des Dünnwandbereichs 14 erzeugte Massagekraft in die oberen Zitzenbereiche übertragen werden, so dass eine gute Massage im Strichkanalbereich gewährleistet ist. Diese gute Massage wird durch die vergleichsweise dünnen Massagezonen 25 unterstützt, die durch die Stabilisierungsleisten 20, 22 und die Querrippen 24 begrenzt sind.

Selbstverständlich kann auch eine andere Relativanordnung der Stabilisierungsleisten 20, 22 gewählt werden. So könnten beispielsweise die Stabilisierungsleisten parallel verlaufen, wobei dann zur Anpassung an das Zitzengummiprofil beispielsweise das Leistenprofil über die Länge variiert werden kann.

Wie aus der Vorderansicht gemäß Figur 2 und der Seitenansicht gemäß Figur 3 hervorgeht, umgreift die Rückwand 16 im Bereich des Zitzengummikopfes 2 etwa 180° des Umfangs des Schlauchteils 4. Im Bereich der Spannwulst 8 verringert sich dieser Umfangsanteil etwas, so dass sich der Abstand zu der in Figur 3 eingezeichneten Vertikalebene 26 zur Spannwulst 8 hin vergrößert. Der Übergang zur dünnwandigen Massagewandung 18 erfolgt über zwei Rückwandkanten 28, 30. Insbesondere aus der Darstellung gemäß Figur 3 ist entnehmbar, dass sich die Wandstärke der Massagewandung 18 vom Zitzengummikopf 2 hin zur Spannwulst 8 verringert. Die Wandstärke der Rückwand 16 bleibt im Wesentlichen gleich, so dass sich entsprechend der Darstellung in den Figuren 3 und 4 jeweils eine konische Rückwandkante 28, 30 ausbildet.

Die V-Stellung der beiden Stabilisierungsleisten 20, 22 ist so gewählt, dass ihr Abstand D (siehe Figur 3) zur benachbarten Rückwandkante 28 bzw. 30 gleich bleibt - die Stabilisierungsleisten 20, 22 verlaufen somit in etwa parallel zu der jeweiligen benachbarten Rückwandkante 28, 30.

Der Abstand d der Querrippen 24 liegt beim dargestellten Ausführungsbeispiel vorzugsweise im Bereich zwischen 8 bis 15 mm. Der sich ändernde Abstand S zwischen den beiden Stabilisierungsleisten 20, 22 (siehe Figur 3) sollte in Abhängigkeit von den Abmessungen des Schlauchteils 4 etwa die Hälfte des Außendurchmessers des Schlauchteils, d.h. üblicherweise etwa 10 bis 14 mm betragen. Des Weiteren sollte die Distanz S der Stabilisierungsleisten 20, 22 zu einander größer sein als der Abstand D der Stabilisierungsleiste 18, 20 zur jeweils benachbarten Rückwandkante 28, 30.

In der Darstellung gemäß Figur 4 sieht man besonders gut den im Wesentlichen parallelen Verlauf von Rückwandkante 28 und benachbarter Stabilisierungsleiste 22.

Die Stabilisierungsstruktur mit den beiden Stabilisierungsleisten 20, 22 und den Querrippen 24 (im vorliegenden Fall sieben Querrippen 24) kann einstückig am Zitzengummikopf ausgebildet sein. Prinzipiell kann diese Verstärkungsstruktur jedoch auch aufgeklebt oder in sonstiger Weise aufgebracht werden.

Wie insbesondere aus der Darstellung in Figur 1 hervorgeht, können die beiden Stabilisierungsleisten 20, 22 in etwa mit einem Halbrundprofil ausgeführt sein. Gemäß der Darstellung in Figur 1 ist zur Steuerung der Elastizität auch ein Hohlprofil verwendbar. Die Querrippen 24 sind beim dargestellten Ausführungsbeispiel etwa trapezförmig ausgebildet; selbstverständlich können auch hier Halbrundprofile oder dergleichen verwendet werden.

Die Länge und die Geometrie der Stabilisierungsstruktur können in Abhängigkeit von der Tierrasse variiert werden, um die Massage zu optimieren.

In der Ansicht gemäß Figur 2 ist die aus den Stabilisierungsleisten 20, 22 und den Querrippen 24 gebildete Struktur praktisch in einer senkrechten Projektion auf die Zeichenebene dargestellt. Verbindet man die Mittelpunkte der Querrippen 24 miteinander, so erhält man eine Strukturachse 34, die in der Darstellung gemäß Figur 2 parallel zur Zitzengummiachse verläuft. Das heißt, diese Strukturachse und diese Mittelachse liegen in einer gemeinsamen Vertikalebene, in der dann entsprechend auch die Mittelachse der Struktur in einer dreidimensionalen Darstellung liegt. In dieser Vertikalebene liegt auch die Mittelachse der diametral gegenüber liegenden Rückwand 16. Mit anderen Worten gesagt, die Struktur bestehend aus den beiden Stabilisierungsleisten 20, 22 und den diese verbindenden Querrippen 24 ist auch symmetrisch mit Bezug zur gegenüberliegenden Rückwand ausgebildet.

In den Figuren 1 bis 4 dargestellt ist des Weiteren noch ein an der Zitzengummikopfwandung ausgebildetes Signalelement 32, über das Kopfvakuum kontrollierbar ist. Einzelheiten dieses Elementes sind in einer parallel hinterlegten Anmeldung erläutert.

Offenbart ist ein Zitzengummi mit einer vergleichsweise dickwandigen Rückwand und einer vergleichsweise dünnwandigen Massagewandung, die sich gemeinsam zum Schlauchteil ergänzen. Erfindungsgemäß sind an der Massagewandung zumindest zwei Stabilisierungsleisten vorgesehen.

### Bezugszeichenliste:

- 1: Zitzengummi
- 2: Zitzengummikopf
- 4: Schlauchteil
- 6: Kopfmuffe
- 8: Spannwulst
- 10: Milchschlauch
- 12: Schrägabschluss
- 14: Dünnwandbereich
- 16: Rückwand
- 18: Massagewandung
- 20: Stabilisierungsleiste
- 22: Stabilisierungsleiste
- 24: Querrippe
- 25: Massagezone
- 26: Vertikalebene
- 27: Längserhebung
- 28: Rückwandkante
- 30: Rückwandkante
- 32: Signalelement
- 34: Strukturachse

## Patentansprüche

1. Zitzengummi mit einem Zitzengummikopf (2) und einem Schlauchteil (4), das einen Innenraum begrenzt, in dem ein Vakuumanschluss mündet, der gegenüber dem Vakuum verschließbar ist, wobei das Schlauchteil (4) eine sich etwa vom Zitzengummikopf (2) bis in den Bereich des Vakuumanschlusses über mehr als 30% des Schlauchteilumfangsbereiches erstreckende Schlauchteil-Rückwand (16) hat, deren Wandstärke deutlich größer ist als die Wandstärke einer Massagewandung (18), die sich in einem Zitzenaufnahmebereich mit der Rückwand (16) zum Schlauchteil (4) ergänzt, **dadurch gekennzeichnet, dass** die Massagewandung (18) zumindest zwei, vorzugsweise zwei Stabilisierungsleisten (20, 22) hat, wobei sich die Rückwand (16) zitzengummikopfseitig etwa entlang der Hälfte des Umfangs des Schlauchteils (4) und vakuumanschlussseitig entlang eines geringeren Umfangsanteils erstreckt.

2. Zitzengummi nach Patentanspruch 1, wobei die Stabilisierungsleisten (20, 22) schräg zueinander angestellt sind.

3. Zitzengummi nach Patentanspruch 1 oder 2, wobei die beiden Stabilisierungsleisten (20, 22) jeweils in etwa im Parallelabstand zu einer benachbarten Rückwandkante (16) verlaufen.

4. Zitzengummi nach einem der vorhergehenden Patentansprüche, mit zumindest einer, vorzugsweise einer Vielzahl von Querrippen (24) zwischen den Stabilisierungsleisten (20, 22), die jeweils eine Massagezone (25) abschnittsweise begrenzen.

5. Zitzengummi nach einem der vorhergehenden Patentansprüche, wobei der Abstand zwischen den beiden Stabilisierungsleisten (20, 22) in etwa die Hälfte des Schlauchteildurchmessers beträgt und/oder größer ist als der Abstand (D) der Stabilisierungsleiste (20, 22) zur Rückwand (16).

6. Zitzengummi nach einem der vorhergehenden Patentansprüche, wobei die Stabilisierungsleisten (20, 22) im Abstand zum Vakuumanschluss enden.

7. Zitzengummi nach einem der vorhergehenden Patentansprüche, wobei die Wandstärke der Massagewandung (18) anschlussseitig kleiner als kopfseitig ist.

8. Zitzengummi nach einem der vorhergehenden Patentansprüche, wobei die Rückwand (16) etwa stufenförmig in die Massagewandung (18) übergeht.

9. Zitzengummi nach Patentanspruch 8, wobei die Rückwand (16) über Rückwandkanten (28, 30) in die Massagewandung (18) übergeht.

10. Zitzengummi nach einem der vorhergehenden Patentansprüche, wobei der Übergangsbereich zwischen Rückwand (16) und Massagewandung (18) mit Bezug zur Längsachse schräg angestellt ist.

11. Zitzengummi nach einem der vorhergehenden Patentansprüche, wobei der Querschnitt des Schlauchteils (4) oval ist.

12. Zitzengummi nach einem der vorhergehenden Patentansprüche, wobei die Wandstärke der Rückwand (16) im Bereich zwischen 3,5 und 5 mm und die Wandstärke der Massagewandung (18) im Bereich zwischen 1,0 bis 3,0 mm liegt.

13. Zitzengummi nach einem der vorhergehenden Patentansprüche, mit einer etwa in Verlängerung der Stabilisierungsleisten (20, 22) ausgebildeten Längserhebung (27).

14. Zitzengummi nach einem der vorhergehenden Patentansprüche, wobei eine Mittelachse (34) einer senkrechten Projektion der beiden Stabilisierungsleisten (20, 22) in einer Vertikalebene (26) des Zitzengummis (2) liegt.

## Claims

1. Teat cup liner comprising a teat cup liner head (2) and a tube part (4) which delimits an interior space into which a vacuum connection opens, which vacuum connection can be closed against the vacuum, wherein the tube part (4) has a tube part rear wall (16) extending approximately from the teat cup liner head (2) into the area of the vacuum connection over more than 30% of the peripheral area of the tube part, the wall thickness of the tube part rear wall being significantly larger than the wall thickness of a massage wall (18), which in a teat receiving area is complementary to the rear wall (16) forming the tube part (4), **characterised in that** the massage wall (18) has at least two, preferably two stabilising strips (20, 22), wherein the rear wall (16) extends on the teat cup liner head side along approximately half the circumference of the tube part (4) and on the vacuum connection side extends along a smaller portion of the circumference.

2. Teat cup liner according to claim 1, wherein the stabilising strips (20, 22) are inclined relative to one other.

3. Teat cup liner according to claim 1 or 2, wherein both stabilising strips (20, 22) extend respectively approximately at a parallel distance from an adjacent rear wall edge (16).

4. Teat cup liner according to any of the preceding claims, comprising at least one, preferably a plurality of transverse ribs (24) between the stabilising strips (20, 22), each of which delimits a massage area (25) in some sections.

5. Teat cup liner according to any of the preceding claims, wherein the distance between the two stabilising strips (20, 22) is approximately half the diameter of the tube part and/or is greater than the distance (D) of the stabilising strip (20, 22) from the rear wall (16).

6. Teat cup liner according to any of the preceding claims, wherein the stabilising strips (20, 22) end at a distance from the vacuum connection.

7. Teat cup liner according to any of the preceding claims, wherein the wall thickness of the massage wall (18) is smaller on the connection side than on the head side.

8. Teat cup liner according to any of the preceding claims, wherein the rear wall (16) merges step-like into the massage wall (18).

9. Teat cup liner according to claim 8, wherein the rear wall (16) merges via rear wall edges (28, 30) into the massage wall (18).

10. Teat cup liner according to any of the preceding claims, wherein the transitional area between the rear wall (16) and massage wall (18) is inclined diagonally to the longitudinal axis.

11. Teat cup liner according to any of the preceding claims, wherein the cross-section of the tube part (4) is oval.

12. Teat cup liner according to any of the preceding claims, wherein the wall thickness of the rear wall (16) is within a range of 3.5 to 5 mm and the wall thickness of the massage wall (18) is within a range of 1.0 to 3.0 mm.

13. Teat cup liner according to any of the preceding claims, comprising a longitudinal elevation (27) formed approximately in extension of the stabilising strips (20, 22).

14. Teat cup liner according to any of the preceding claims, wherein a central axis (34) of a vertical projection of the two stabilising strips (20, 22) is located in a vertical plane (26) of the teat cup liner (2).

## Revendications

1. Manchon trayeur comprenant une tête de manchon trayeur (2) et une partie de tuyau souple (4), qui délimite une espace interne, dans lequel débouche un raccord à vide, qui peut être fermé vis-à-vis du vide, dans lequel la partie de tuyau souple (4) a une paroi arrière (16) de la partie de tuyau souple qui s'étend plus ou moins de la tête de manchon trayeur (2) jusque dans la zone du raccord à vide sur plus de 30 % de la zone périphérique de la partie de tuyau souple, dont l'épaisseur de paroi est nettement plus grande que l'épaisseur d'une paroi de massage (18), qui se complète dans une zone réceptrice de trayon avec la paroi arrière (16) dans la partie de tuyau souple (4), **caractérisé en ce que** la paroi de massage (18) a au moins deux, de préférence deux nervures de stabilisation (20, 22), dans lequel la paroi arrière (16) s'étend côté tête du manchon trayeur plus ou moins le long de la moitié de la périphérie de la partie de tuyau souple (4) et côté raccord de vide le long d'une fraction de périphérie plus petite.

2. Manchon trayeur selon la revendication 1, dans lequel les nervures de stabilisation (20, 22) sont disposées en oblique l'une par rapport à l'autre.

3. Manchon trayeur selon la revendication 1 ou 2, dans lequel les deux nervures de stabilisation (20, 22) s'étendent respectivement plus ou moins à une distance en parallèle d'une arête de paroi arrière voisine (16).

4. Manchon trayeur selon l'une quelconque des revendications précédentes, comprenant au moins une, de préférence une pluralité de nervures transversales (24) entre les nervures de stabilisation (20, 22), qui délimitent par sections respectivement une zone de massage (25).

5. Manchon trayeur selon l'une quelconque des revendications précédentes, dans lequel la distance entre les deux nervures de stabilisation (20, 22) atteint à peu près la moitié du diamètre de la partie de tuyau souple et/ou est supérieure à la distance (D) de la nervure de stabilisation (20, 22) à la paroi arrière (16).

6. Manchon trayeur selon l'une quelconque des revendications précédentes, dans lequel les nervures de stabilisation (20, 22) se terminent à distance du raccord à vide.

7. Manchon trayeur selon l'une quelconque des revendications précédentes, dans lequel l'épaisseur de paroi de la paroi de massage (18) est plus petite côté raccord que côté tête.

8. Manchon trayeur selon l'une quelconque des revendications précédentes, dans lequel la paroi arrière (16) se fond plus ou moins sous forme étagée dans la paroi de massage (18).

9. Manchon trayeur selon la revendications 8, dans lequel la paroi arrière (16) se fond dans la paroi de massage (18) via des arêtes de paroi arrière (28, 30).

10. Manchon trayeur selon l'une quelconque des revendications précédentes, dans lequel la zone de transition entre la paroi arrière (16) et la paroi de massage (18) est conçue en oblique par rapport à l'axe longitudinal.

11. Manchon trayeur selon l'une quelconque des revendications précédentes, dans lequel la section transversale de la partie de tuyau souple (4) est ovale.

12. Manchon trayeur selon l'une quelconque des revendications précédentes, dans lequel l'épaisseur de la paroi arrière (16) se situe dans la plage comprise entre 3,5 et 5 mm et l'épaisseur de la paroi de massage (18) se situe dans la plage comprise entre 1,0 et 3,0 mm.

13. Manchon trayeur selon l'une quelconque des revendications précédentes, comprenant une élévation longitudinale (27) plus ou moins formée dans le prolongement des nervures de stabilisation (20, 22).

14. Manchon trayeur selon l'une quelconque des revendications précédentes, dans lequel un axe central (34) d'une projection perpendiculaire des deux nervures de stabilisation (20, 22) se situe dans un plan vertical (26) du manchon trayeur (2).
